# EUROPÄISCHE PATENTSCHRIFT

(11) **EP 0 523 567 B1**
(45) Veröffentlichungstag und Bekanntmachung des Hinweises auf die Patenterteilung: **29.05.1996**
(21) Anmeldenummer: 92111806.3
(22) Anmeldetag: 10.07.1992
(51) Int. Cl.: C09D 11/02

(54) **Bronze- oder Effektdruckfarbe und Verfahren zur Herstellung eines Bronze- oder Effekt-druckes**
Bronze- or effect-printing ink and process for producing a bronze or effect print
Encre d'impression de bronze couleur ou d'effet et procédé d'obtention d'une telle impression

(30) Priorität: 11.07.1991 DE 4122990
(43) Veröffentlichungstag der Anmeldung: 20.01.1993
(73) Patentinhaber: MICHAEL HUBER MÜNCHEN GMBH, D-85551 Kirchheim (DE)
(72) Erfinder: Heinemann, Andrea, W-8000 München 40 (DE); Rietzler, Klaus, W-4709 Bergkamen (DE)
(74) Vertreter: Motsch, Andreas

(56) Entgegenhaltungen:
- EP-A- 0 317 906
- DE-A- 2 839 501
- FR-A- 2 357 615

## Beschreibung

Die Erfindung betrifft eine wasserverdünnbare Bronze- oder Effektdruckfarbe.

Die Erfindung betrifft ferner ein Verfahren zur Herstellung eines Bronze- oder Effektdruckes.

Bei der Herstellung hochwertiger Verpackungen ist es aus gestalterischen Gründen häufig notwendig zur Erzielung eines brillianten Goldeffektes eine Maschinenbronzierung durchzuführen. Mit herkömmlichen Offset-Golddruckfarben läßt sich ein solcher Goldeffekt nicht erzielen.

Aus Gründen des Umweltschutzes, der Arbeitsplatzhygiene und der Kosteneinsparung ist man ferner bestrebt Druckfarben zu entwikkeln, die bei der Trocknung möglichst geringe Lösungsmittelmengen freisetzen. Wasserverdünnbare Farbsysteme haben sich als hierfür geeignet erwiesen.

In der DE-OS 28 39 501 wird eine Goldbronzedruckfarbe in Form eines Sols beschrieben, die aus einem Bindemittel mit einem Kunstharzlack, einem Gellack, einem Tungöllack oder einem Erdöllösungsmittel und einem Amin besteht und einem Goldbronzepulver aus einer Aluminium enthaltenden Messinglegierung, das in Form feiner Plättchen vorliegt, die eine Oberflächenfettsäureschicht tragen, sowie ggf. üblichen Zusatzstoffen und Hilfsmitteln. Bei dieser Farbe handelt es sich jedoch um keine wasserverdünnbare Goldbronzedruckfarbe.

Die Maschinenbronzierung nach dem Stand der Technik weist jedoch folgende, schwerwiegende Nachteile auf:
- Es mußte bisher in einem separaten Arbeitsgang eine Goldunterdruckfarbe gedruckt werden.
- Der damit hergestellte Druck ist nicht geruchsarm, was insbesondere bei Lebensmitteln- bzw. Zigarettenverpackungen nachteilig ist.
- Anschließend muß in einem weiteren Arbeitsgang Goldbronzepuder aufgetragen werden. Der dabei nicht auf der Goldunterdruckfarbe haftende Überschuß muß durch eine Plüschwalzenwischung entfernt werden.
- Die vollständige Entfernung des Metallschliffs von den bedruckten Oberflächen (Abstauben) gelingt häufig nicht, was als ein Qualitätsmangel anzusehen ist. Das Abstauben ist häufig mit Schwierigkeiten verbunden, wie das Fahren mit geringen Maschinengeschwindigkeiten, was ebenfalls als Nachteil anzusehen ist.
- Das gebrauchte Bronzepulver muß wieder aufbereitet und neuem Pulver anteilig zudosiert werden.
- Desweiteren entstehen im Arbeitsbereich Verunreinigungen durch Bronzeflugstaub, der sowohl zu einem Mehrverbrauch an Bronzepulver als auch zu gesundheitlichen Beeinträchtigungen führen kann.
- Zur Fixierung der Bronzepartikel muß schließlich in einem dritten separaten Arbeitsgang überlackiert werden.

Die Aufgabe der Erfindung besteht somit darin, sowohl eine Bronze- oder Effektdruckfarbe als auch ein Verfahren zur Herstellung eines Bronze- oder Effektdruckes zur Verfügung zu stellen, mit denen diese Nachteile überwunden werden können.

Zur Lösung dieser Aufgabe müssen folgende Bedingungen erfüllt werden:
1. Es muß ein Bindemittel formuliert werden, das einerseits wasserverdünnbar ist und andererseits Messingschliff nicht korrodiert. Aus dem Stand der Technik bekannte alkalisch komplett verseifte Harzlösungen und ammoniakalische Dispersionen als Alleinbindemittel sind ungeeignet, da sie die Bronzeteilchen korrodieren und instabil sind.
2. Es muß hinsichtlich des Metalleffekts und der Partikelgrössenverteilung eine geeignete Bronzequalität gefunden werden.
3. Es muß für eine derartige neue Farbe ein Applikationsverfahren gefunden werden.

Diese Bedingungen können bei wasserverdünnbaren metallpigmentierten Systemen durch Einkomponenten-Druckfarben aufgrund mangelnder Stabilisierung nicht erreicht werden.

Die Aufgabe wird erfindungsgemäß durch eine wasserverdünnbare Bronze- oder Effektdruckfarbe gelöst, die dadurch gekennzeichnet ist, daß ... A1.

In speziellen Ausführungsformen weisen die Styrole- und/oder Acrylate einen Molmassenbereich von 100.000 bis 10.000.000 auf und als Glycol werden Ethyldiglycol, Ethandiol oder 1,2-Propylenglycol eingesetzt.

In einer weiteren speziellen Ausführungsform wird als Wachskomponente Wachs auf der Basis von Carnauba-, Polyethvlen- oder Polytetrafluorethylen-Wachs eingesetzt.

Der Metalleffekt der verdruckten Farbe ist in starkem Maße abhängig von der eingesetzten Messing- oder Aluminium-Schliffqualität. Insbesondere ist hierbei die Teilchengrößenverteilung von Einfluß. Daneben ist ein gutes Übertragungsverhalten der Farbe in der Druckmaschine erforderlich.

Folgende einfache und doppeltpolierte Bronzen haben sich als geeignet erwiesen:
Bleichgold (3 - 20 µm),
Reichgold (3 - 20 µm),
Reichbleichgold (3 - 20 µm),
Reichbleichgold (3 - 20 µm) angeteigt in Methoxypropanol,
Aluminium (3 - 20 µm) angeteigt in Methoxypropanol.

Als Perlglanzpigmente können Iriodine® und/oder Iriobrozen®, als im Hochvakuum erzeugte Plättchen können Metalure® und/oder Dekomet® und/oder Paliocrom® eingesetzt werden.

Die erfindungsgemäße Zweikomponenten-Druckfarbe erfüllt die gestellten Anforderungen sehr gut.

In dem Bindemittel-System der Komponente A dienen Cellulose-ether, Kollagen und Polyethylenglycol als Verdickungsmittel und Übertragungshilfe beim Druckprozeß. Als besonders vorteilhaftes Polyethylenglycol hat sich Rewopal PEG 6000 PS erwiesen.

Der pH-Wert der Styrol- und Acrylatdispersionen/ -lösungen liegt üblicherweise zwischen 7,0 und 9,0.

Als geeignete Styrol- und/oder Acrylatdispersionen bzw. -lösungen haben sich Zinpol 132® und Zinpol 146® erwiesen.

Die im Bindemittelsystem verwendeten Glycole dienen als Filmbildungshilfsmittel und/oder Trocknungsverzögerer.

Zur Herstellung der erfindungsgemäßen Zweikomponentenfarbe wird zunächst die Komponente A aus dem Bindemittelsystem und einer oder mehrerer Wachskomponenten durch Zusammenmischen hergestellt. Die Wachse dienen der Einstellung der Glätte und Scheuerfestigkeit der Drucke. Als Komponenten B werden vorzugsweise Bronzen in Pastenform, d.h. angeteigte Metallschliffe verwendet. Zur Formulierung der druckfertigen Farbe werden diese dann mit dem Bindemittel langsam verrührt. Gegebenenfalls können dem Bindemittelsystem oder der Druckfarbe weitere übliche Zusätze hinzugefügt werden.

Die Auslaufzeit der verdruckten Farbe liegt zwischen 60 und 180 Sekunden Auslaufzeit, gemessen im Auslaufbecher nach DIN 53211/4. Bevorzugt wird eine Auslaufzeit zwischen 60 und 120 Sekunden, insbesondere bevorzugt ist eine Auslaufzeit zwischen 80 und 120 Sekunden.

Des weiteren wird die Aufgabe erfindungsgemäß durch ein Verfahren zur Herstellung eines Bronze- oder Effektdruck gelöst, das dadurch gekennzeichnet ist, daß die erfindungsgemäße Druckfarbe aus dem Lackwerk einer Offsetmaschine oder Lackiermaschine oder aus einem Flexodruckwerk verarbeitet wird.

Als Applikationsverfahren für die erfindungsgemäße Druckfarbe erwies sich die Verarbeitung aus dem Lackwerk einer Offsetmaschine und/oder Lackiermaschine oder aus einem Flexodruckwerk als vorteilhaft. Dies liegt daran, daß der weg vom Farbvorratsbehälter (Lackwanne) zum Bedruckstoff in diesem Falle kurz ist, so daß die Anzahl der Farbspaltungen gering bleibt. Als besonders vorteilhaft hat sich die Applikation über direkt auftragende Lackauftragungssysteme im Bogenoffsetmaschinen erwiesen. Der Formzylinder kann mit einem Gummituch oder Polymerklischees vom Typ APR, Napp, Cyrel, Nyloflex oder Nyloprint oder auch Druckplatten mit selbstklebender Polymerfolie belegt sein.

Wie bereits ausgefürht, sind Metallpigmente aufgrund mangelnder Stabilität für wasserverdünnbare Einkomponentendruckfarben nicht geeignet. Werden keine Metallpigmente eingesetzt, wird eine entsprechende Einkomponentendruckfarbe stabil sein.

Eine weitere Ausführungsform der Erfindung umfaßt daher die A8.

Die hierbei eingesetzten Styrole und/oder Acrylate, Glykole, Wachskomponenten, Perlglanzpigmente , im Hochvakuum erzeugte Plättchen und Farbpigmente sind die gleichen wie bei der zweikomponentenfarbe.

Die Beispiele erläutern die Erfindung.

### Beispiele 1 bis 3 und 6 bis 10:

Es wurde auf einer Heidelberger-Speedmaster-Bogenoffsetmaschine, die mit einer Cyrel-Platte mit Untertuch (grün, 2mm) und einer 75er Rasterwalze (Näpfchentiefe 30 µm) ausgerüstet war, gedruckt.

### Beispiel 1

Die Druckfarbe hat folgende Rezeptur:
8,25 kg Zinpol 146®
0,75 kg Wasser
6,00 kg Reichbleichgold (8 µm) (90%ig)

Dies entspricht einem Wassergehalt von 5%, einem Pigmentenpastenanteil von 40% und einem Pigmentanteil von 36%.

### Beispiel 2

Die Druckfarbe hat folgende Rezeptur:
11,00 kg Zinpol 146®
3,00 kg Wasser
8,00 kg Bronze (8 µm) (90%ig)

Dies entspricht einem Wassergehalt von 13,6%, einem Pigmentenpastenanteil von 36,0% und einem Pigmentanteil von 33%.

### Beispiel 3

Die Druckfarbe hat folgende Rezeptur:
9,60 kg Zinpol 146 ®
7,00 kg Reichbleichgold-Paste (8 µm) (90%ig)
0,70 kg Propylenglycol (Verzögerer)
0,70 kg Wasser

Dies entspricht einem Wassergehalt von 4%, einem Verzögerergehalt von 4%, einem Pigmentpastenanteil von 38,8% und einem Pigmentanteil von 35,0%.

In allen drei Beispielen 1 bis 3 war der Ausdruck gut bis sehr gut und der Goldeffekt in Ordnung.

### Beispiele 4 und 5

Die Durchführung erfolgte entsprechend den Beispielen 1 bis 3, wobei jedoch die Rasterwalze durch eine Chromwalze ersetzt war.

### Beispiel 4

Die Druckfarbe hat die identische Rezeptur wie die in Beispiel 3.

### Beispiel 5

Die Druckfarbe hat folgende Rezeptur:
9,625 kg Zinpol 146 ®
7,000 kg Reichbleichgold (8 µm) (90%ig)
0,950 kg Wasser
1,700 kg Propylenglycol.

Dies entspricht einem Wassergehalt von 4,9%, einem Verzögereranteil von 8,8%, Pigmentenpastenanteil von 36% und einem Pigmentanteil von 33%. Die Fotopolymerplatte wurde unterschiedlich lang belichtet (22s bis 28s). Das beste Ergebnis zeigte eine Fotopolymerplatte mit einer Belichtungszeit von 28s.

In den Beispielen 4 und 5 war das Ausdrucken gut bis sehr gut und der Goldeffekt ebenfalls gut bis sehr gut.

### Beispiel 6

Die Druckfarbe hat folgende Rezeptur:
5 kg Zinpol 146®
1 kg Propylenglycol
4 kg Iriodin 153®

### Beispiel 7

5 kg Zinpol 146®
1 kg Propylenglycol
4 kg Iriodine 300®

### Beispiel 8

9,3 kg Zinpol 146®
0,4 kg Propylenglycol
0,3 kg Metalure Typ L 55350 AE®

### Beispiel 9

7,4 kg Zinpol 146®
0,5 kg Propylenglycol
2,1 kg Fanalblau D 6390®

### Beispiel 10

9,0 kg Zinpol 146®
0,1 kg Propylenglycol
0,3 kg Metalure L 55350 AE®
0,4 kg Irgalith gelb LBIW®
0,2 kg Irgalith orange F2G®

In den Beispielen 6 bis 10 war das Ausdrucken gut bis sehr gut und der Farbeffekt ebenfalls gut bis sehr gut.

Durch die erfindungsgemäße Druckfarbe und das Verfahren ist es somit jetzt möglich ein der Bronzierung des Standes der Technik vergleichbaren Metalleffekt mit glattem, geschlossenem Ausdruck von Flächen bzw. offenen Ausdrucken in negativen Schriften zu erreichen. Darüberhinaus kann dieser Bronzeeffekt nunmehr im Online-Verfahren realisiert werden.

## Patentansprüche (Patentansprüche für folgende(n) Vertragsstaat(en): AT, BE, CH, DE, DK, FR, GB, IT, LI, NL, SE)

1. Wasserverdünnbare Bronze- oder Effektdruckfarbe, **dadurch gekennzeichent,**
**daß** sie
55-70 Gew.-% einer ersten Komponente A und 30-45 Gew.-% einer zweiten Komponente B umfaßt,
wobei die Komponente A
80-100 Gew.-% eines Bindemittelsystems und
0-20 Gew.-% eines oder mehrerer Wachskomponenten umfaßt,
wobei das Bindemittelsystem
0-15 Gew.-% Celluloseether- und/oder Kollagen und/oder Polyethylenglykol,
60-100 Gew.-% Styrol- und/oder Acrylatdispersionen/lösungen, ausgenommen sauere Acrylatdispersionen/-lösungen, mit einem Festkörpergehalt zwischen 35 und 50 Gew.-% und 0-15 Gew.-% eines oder mehrerer Glykole umfaßt, und wobei die Komponente B Bronze und/oder Aluminium in Schliff- oder Pastenform und/oder ein oder mehrere Perlglanzpigmente und/oder im Hochvakuum oder hydrothermal erzeugte Plättchen und/oder ein oder mehrere Farbpigmente umfaßt.

2. Druckfarbe nach Anspruch 1, dadurch gekennzeichnet, daß als Bronze Bleichgold, Reichgold oder Reichbleichgold eingesetzt wird.

3. Druckfarbe nach Anspruch 1 oder 2, dadurch gekennzeichnet, daß die Styrole und/oder Acrylate einen Molmassenbereich von 100.000 bis 10.000.000 aufweisen.

4. Druckfarbe nach einem der vorhergehenden Ansprüche, dadurch gekennzeichnet, daß als Glykol Ethandiöl oder 1,2-Propylenglykol eingesetzt wird.

5. Druckfarbe nach einem der vorhergehenden Ansprüche, dadurch gekennzeichnet, daß als Wachskomponente Wachs auf der Basis von Carnauba-, Polyethylen- oder Polytetrafluorethylen-Wachs eingesetzt wird.

6. Druckfarbe nach einem der Ansprüche 1 bis 2, dadurch gekennzeichnet, daß als Perlglanzpimente Iriodine® und/oder Iriobronzen®, daß als im Hochvakuum erzeugte Plättchen Metalure® und/oder Dekomete® und/oder Paliocrom® eingesetzt werden.

7. Verfahren zur Herstellung eines Bronze- oder Effektdrucks, dadurch gekennzeichnet, daß die Druckfarbe nach einem der Ansprüche 1 bis 6 aus dem Lackwerk einer Offsetmaschine und/oder Lackiermaschine oder aus einem Flexodruckwerk verarbeitet wird.

8. Verwendung einer wasserverdünnbaren Effektdruckfarbe, die
0-15 Gew.-% Celluloseether und/oder Kollagen und/oder Polyethylenglykol,
40-95 Gew.-% Styrol- und/oder Acrylatdispersionen/-lösungen, ausgenommen sauere Acrylat dispersionen/-lösungen, mit einem Festkörpergehalt zwischen 35 und 50 Gew.-%,
0-15 Gew.-% eines oder mehrerer Glykole,
0-20 Gew.-% eines oder mehrerer Wachskomponenten,
2-45 Gew.-% eines oder mehrerer Perlglanzpigmente und/oder im Hochvakuum oder hydrothermal erzeugte Plättchen und/oder eines oder mehrerer Farbpigmente umfaßt, in einem Verfahren zur Herstellung eines Effektdrucks, wobei die Druckfarbe aus dem Lackwerk einer Offsetmaschine und/oder Lackiermaschine oder aus einem Flexodruckwerk verarbeitet wird.

## Patentansprüche (Patentansprüche für folgende(n) Vertragsstaat(en): ES)

1. Verfahren zur Herstellung einer wasserverdünnbaren Bronze- oder Effektdruckfarbe, die
55-70 Gew.-% einer ersten Komponente A und
30-45 Gew.-% einer zweiten Komponente B umfaßt,
wobei die Komponente A
80-100 Gew.-% eines Bindemittelsystems und
0-20 Gew.-% eines oder mehrerer Wachskomponenten umfaßt,
wobei das Bindemittelsystem
0-15 Gew.-% Celluloseether- und/oder Kollagen und/oder Polyethylenglykol,
60-100 Gew.-% Styrol- und/oder Acrylatdispersionen/lösungen, ausgenommen sauere Acrylatdispersionen/-lösungen, mit einem Festkörpergehalt zwischen 35 und 50 Gew.-% und 0-15 Gew.-% eines oder mehrerer Glykole umfaßt, und wobei die Komponente B Bronze und/oder Aluminium in Schliff- oder Pastenform und/oder ein oder mehrere Perlglanzpigmente und/oder im Hochvakuum oder hydrothermal erzeugte Plättchen und/oder ein oder mehrere Farbpigmente umfaßt,
wobei zunächst die Komponente A aus dem Bindemittelsystem und einer oder mehrerer Wachskomponenten durch Zusammenmischen hergestellt wird und zur Formulierung der durchfertigen Farbe die Komponente B dann mit dem Bindemittel langsam verrührt wird.

2. Verfahren nach Anspruch 1, dadurch gekennzeichnet, daß als Bronze Bleichgold, Reichgold oder Reichbleichgold eingesetzt wird.

3. Verfahren nach Anspruch 1 oder 2, dadurch gekennzeichnet, daß die Styrole und/oder Acrylate einen Molmassenbereich von 100.000 bis 10.000.000 aufweisen.

4. Verfahren nach einem der vorhergehenden Ansprüche, dadurch gekennzeichnet, daß als Glykol Ethandiol oder 1,2-Propylenglykol eingesetzt wird.

5. Verfahren nach einem der vorhergehenden Ansprüche, dadurch gekennzeichnet, daß als Wachskomponente Wachs auf der Basis von Carnauba-, Polyethylen- oder Polytetrafluorethylen-Wachs eingesetzt wird.

6. Verfahren nach einem der Ansprüche 1 bis 2, dadurch gekennzeichnet, daß als Perlglanzpimente Iriodine® und/oder Iriobronzen®, daß als im Hochvakuum erzeugte Plättchen Metalure® und/oder Dekomete® und/oder Paliocrom® eingesetzt werden.

7. Verfahren zur Herstellung eines Bronze- oder Effektdrucks, dadurch gekennzeichnet, daß die Druckfarbe nach einem der Ansprüche 1 bis 6 aus dem Lackwerk einer Offsetmaschine und/oder Lackiermaschine oder aus einem Flexodruckwerk verarbeitet wird.

8. Verwendung einer wasserverdünnbaren Effektdruckfarbe, die
0-15 Gew.-% Celluloseether und/oder Kollagen und/oder Polyethylenglykol,
40-95 Gew.-% Styrol- und/oder Acrylatdispersionen/-lösungen, ausgenommen sauere Acrylatdispersion/-lösungen, mit einem Festkörpergehalt zwischen 35 und 50 Gew.-%,
0-15 Gew.-% eines oder mehrerer Glykole,
0-20 Gew.-% eines oder mehrerer Wachskomponenten,
2-45 Gew.-% eines oder mehrerer Perlglanzpigmente und/oder im Hochvakuum oder hydrothermal erzeugte Plättchen und/oder eines oder mehrerer Farbpigmente umfaßt, in einem Verfahren zur Herstellung eines Effektdrucks, wobei die Druckfarbe aus dem Lackwerk einer Offsetmaschine und/oder Lackiermaschine oder aus einem Flexodruckwerk verarbeitet wird.

## Claims (Claims for the following Contracting State(s): AT, BE, CH, DE, DK, FR, GB, IT, LI, NL, SE)

1. Water dilutable bronze or effect printing ink characterised in that said printing ink comprises
55-70% by weight of a first component A and
30-45% by weight of a second component B,
wherein said component A comprises
80-100% by weight of a vehicle system and
0-20% by weight of one or more wax components,
wherein said vehicle system comprises
0-15% by weight of a cellulose ether and/or collagen and/or polyethylene glycol,
60-100% by weight of styrene and/or acrylate dispersions/solutions, except acidic acrylate dispersions/solutions, having a solid content between 35 and 50% by weight, and 0-15% by weight of one or more glycols, and
wherein said component B comprises bronze and/or aluminium in form of a ground or a paste and/or one or more pearlescent pigments and/or small plates generated in high vacuum or hydrothermally and/or one or more colour pigments.

2. Printing ink according to claim 1, characterised in that as said bronze Bleichgold, Reichgold or Reichbleichgold is used.

3. Printing ink according to claim 1 or 2, characterised in that said styrenes and/or acrylates have a range of the relative molecular mass of from 100.000 to 10.000.000.

4. Printing ink according to any of the preceeding claims, characterised in that as glycol ethanediol or 1,2-propylene glycol is used.

5. Printing ink according to any of the preceeding claims, characterised in that as said wax component wax on the basis of carnauba, polyethylene or polytetrafluoroethylene wax is used.

6. Printing ink according to any of the claims 1 and 2, characterised in that as said pearlescent pigments Iriodins® and/or Iriobronzes® that as said small plates generated in high vacuum Metalure® and/or Dekomete® and/or Paliocrom® is used.

7. Process for the production of a bronze or effect print, characterised in that said printing ink according to any of the claims 1 to 6 is processed in the lacquering unit of an offset machine and/or lacquering machine or in a flexo printing unit.

8. Use of a water dilutable effect printing ink comprising
0-15% by weight of cellulose ether and/or collagen and/or polyethylene glycol,
40-95% by weight of styrene and/or acrylate dispersions/solutions, except acidic acrylate dispersions/solutions, having a solid content between 35 and 50% by weight,
0-15% by weight of one or more glycols,
0-20% by weight of one or more wax components,
2-45% by weight of one or more pearlescent pigments and/or small plates generated in high vacuum or hydrothermally and/or one or more colour pigments,
in a process for the production of an effect print, wherein the printing ink is processed in said lacquering unit of an offset machine or lacquering machine or in a flexo printing unit.

## Claims (Claims for the following Contracting State(s): ES)

1. Process for the production of a water dilutable bronze or effect printing ink comprising
55-70% by weight of a first component A and
30-45% by weight of a second component B,
wherein said component A comprises
80-100% by weight of a vehicle system and
0-20% by weight of one or more wax components,
wherein said vehicle system comprises
0-15% by weight of a cellulose ether and/or collagen and/or polyethylene glycol,
60-100% by weight of styrene and/or acrylate dispersions/solutions, except acidic acrylate dispersions/solutions, having a solid content between 35 and 50% by weight, and 0-15% by weight of one or more glycols, and
wherein said component B comprises bronze and/or aluminium in form of a ground joint or a paste and/or one or more pearlescent pigments and/or small plates generated in high vacuum or hydrothermally and/or one or more colour pigments,
wherein first the component A is produced from the vehicle system and one or more wax components by mixing together and then the component B is slowly mixed with said vehicle for the formulation of the ink ready for printing.

2. Process according to claim 1, characterised in that as said bronze Bleichgold, Reichgold or Reichbleichgold is used.

3. Process according to claim 1 or 2, characterised in that said styrenes and/or acrylates have a range of the relative molecular mass of from 100.000 to 10.000.000.

4. Process according to any of the preceeding claims, characterised in that as glycol ethanediol or 1,2-propylene glycol is used.

5. Process according to any of the preceeding claims, characterised in that as said wax component wax on the basis of carnauba, polyethylene or polytetrafluoroethylene wax is used.

6. Process according to any of the claims 1 and 2, characterised in that as said pearlescent pigments Iriodins® and/or Iriobronzes® that as said small plates generated in high vacuum Metalure® and/or Dekomete® and/or Paliocrom® is used.

7. Process for the production of a bronze or effect print, characterised in that said printing ink according to any of the claims 1 to 6 is processed in the lacquering unit of an offset machine and/or lacquering machine or in a flexo printing unit.

8. Use of a water dilutable effect printing ink comprising
0-15% by weight of cellulose ether and/or collagen and/or polyethylene glycol,
40-95% by weight of styrene and/or acrylate dispersions/solutions, except acidic acrylate dispersions/solutions, having a solid content between 35 and 50% by weight,
0-15% by weight of one or more glycols,
0-20% by weight of one or more wax components,
2-45% by weight of one or more pearlescent pigments and/or small plates generated in high vacuum or hydrothermally and/or one or more colour pigments,
in a process for the production of an effect print, wherein the printing ink is processed in said lacquering unit of an offset machine or lacquering machine or in a flexo printing unit.

## Revendications (Revendications pour l'(les) Etat(s) contractant(s) suivant(s): AT, BE, CH, DE, DK, FR, GB, IT, LI, NL, SE)

1. Encre d'imprimerie au bronze ou à effet hydrodiluable, caractérisée en ce qu'elle inclut
de 55-70% en poids d'un premier composant A et
de 30-45% en poids d'un deuxième composant B,
le composant A incluant
de 80-100% en poids d'un système de liant et
de 0-20% en poids d'un ou de plusieurs composants de cire, le système de liant incluant
de 0-15% en poids d'éther de cellulose et/ou de collagène et/ou de polyéthylèneglycol,
de 60-100% en poids de dispersions/de solutions de styrène et/ou d'acrylate, à l'exception de dispersions/de solutions acides d'acrylate, ayant une teneur en matières solides comprise entre 35 et 50 % en poids, et de 0- 5% en poids d'un ou de plusieurs glycols, et le composant B incluant du bronze et/ou de l'aluminium sous forme de poli ou de pâte et/ou un ou plusieurs pigments à lustre nacré et/ou des paillettes produites sous vide poussé ou de manière hydrothermale et/ou un ou plusieurs pigments cclorés.

2. Encre d'imprimerie selon la revendication 1, caractérisée en ce que l'on utilise en tant que bronze de l'or de blanchiment, de l'or liche ou de l'or de blanchiment liche.

3. Encre d'imprimerie selon la revendication 1 ou 2, caractérisée en ce que les styrènes et/ou les acrylates présentent un domaine de masse molaire de 100.000 à 10.000.000.

4. Encre d'imprimerie selon l'une que conque des revendications précédentes, caractérisée en ce que l'on utilise, en tant que glycol, l'éthanediol ou le propylène-1,2-glycol.

5. Encre d'imprimerie selon l'une quelconque des revendications précédentes, caractérisée en ce que l'on utilise, en tant que composant de cire, de la cire à base de cire de carnauba, de cire de polyéthylène de cire de polytétrafluoroéthylène.

6. Encre d'imprimerie selon l'une quelconque des revendications 1 à 2, caractérisée en ce que l'on utilise, en tant que pigments à lustre nacré, les produits Iriodine® et/ou les produits Iriobronze®, en ce que, en tant que paillettes produites sous vide poussé, l'on utilise les produits Metalure® et/ou les produits Dekomelen® et/ou le produit Paliocrom®.

7. Procédé de préparation d'une encre d'imprimerie au bronze ou à effet, caractérisé en ce que l'on et en oeuvre l'encre d'imprimerie selon l'une quelconque des revendications 1 à 6 à partir de l'unité de laque d'une machine offset et/ou d une machine de laquage ou à partir d'une unité d'impression flexographique.

8. Utilisation d'une encre d'imprimerie à effet hydrodiluable qui inclu
de 0-15% en poids d'éther de cellulose et/ou de collagène et/ou de polyéthylèneglycol,
de 40-95% en poids de dispersions/de solutions de styrène et/ou d'acrylate, à l'exception de dispersions de solutions acides d'acrylate, ayant une teneur en matières solides comprise entre 35 et 50 % en poids,
de 0-15% en poids d'un ou de plusieurs glycols,
de 0-20% en poids d'un ou de plusieurs composants de cire,
de 2-45% en poids d'un ou de plusieurs pigments à lustre nacré et/ou de paillettes produites sous vide toussé ou de manière hydrothermale et/ou d'un ou de plusieirs pigments colorés, dans un procédé de préparation d'une impression à effet, l'encre d'imprimerie étant mise en oeuvre à partir de l'unité de laque d'une machine offset et/ou d'une machine de laquage ou à partir d'une unité d'impression flexographique.

## Revendications (Revendications pour l'(les) Etat(s) contractant(s) suivant(s): ES)

1. Procédé de préparation d'une encre d'imprimerie au bronze ou à effet hydrodiluable, en ce qu'elle inclut
de 55-70% en poids d'un premier composant A et
de 30-45% en poids d'un deuxième composant B,
le composant A incluant
de 80-100% en poids d'un système de liant et
de 0-20% en poids d'un ou de plusieurs composants de cire, le système de liant incluant
de 0-15% en poids d'éther de cellulose et/ou le collagène et/ou de polyéthylèneglycol,
de 60-100% en poids de dispersions/de solutions de styrène et/ou d'acrylate, à l'exception de dispersions/de solutions acides d'acrylate, ayant une teneur en matières solides comprise entre 35 et 50 % en poids, et de 0-15% en poids d'un ou de plusieurs glycols, et le composant B incluant du bronze et/ou de l'aluminium sous forme de poli ou de pâte et/ou un ou plusieurs pigments à lustre nacré et/ou des paillettes produites sous vide poussé ou de manière hydrothermale et/ou un ou plusieurs pigments colorés,
en ce qu'on produit d'abord le composant A en mélangeant le système de liant avec un ou plusieurs composants de cire et puis agite le composant B lentement avec le liant pour formuler l'encre prêt à imprimer.

2. Procédé selon la revendication 1, caractérisé en ce que l'on utilise en tant que bronze de l'or de blanchiment, de l'or liche ou de l'or de blanchiment liche.

3. Procédé selon la revendication 1 ou 2, ca actérisé en ce que les styrènes et/ou les acrylates présentent un domaine de masse molaire de 100.000 à 10.000.000.

4. Procédé selon l'une quelconque des revendications précédentes, caractérisé en ce que l'on utilise, en tant que glycol, l'éthanediol ou le propylène-1,2-glycol.

5. Procédé selon l'une quelconque des revendications précédentes, caractérisé en ce que l'on utilise, en tant que composant de cire, de la cire à base de cire de carnauba, de cire de polyéthylène ou de cire de polytétrafluoroéthylène.

6. Procédé selon l'une quelconque des revendications 1 à 2, caractérisé en ce que l'on utilise, en tant que pigments à lustre nacré, les produits Iriodine® et/ou les produits Iriobronze®, en ce que, en tant que paillettes produites sous vide poussé, l'on utilise les produits Metalure® et/ou les produits Dekomete® et/ou le produit Paliocrom®.

7. Procédé de préparation d'une encre d'imprimerie au bronze ou à effet, caractérisé en ce que l'on met en oeuvre l'encre d'imprimerie selon l'une quelconque des revendications 1 à 6 à partir de l'unité de laque d'une machine offset et/ou d'une machine de laquage ou à partir d'une unité d'impression flexographique.

8. Utilisation d'une encre d'imprimerie à effet hydrodiluable qui inclut
de 0-15% en poids d'éther de cellulose et/ou de collagène et/ou de polyéthylèneglycol,
de 40-95% en poids de dispersions/de solutions de styrène et/ou d'acrylate, à l'exception de dispersions/de solutions acides d'acrylate, ayant une teneur en matières solides comprise entre 35 et 50 % en poids,
de 0-15% en poids d'un ou,de plusieurs glycols,
de 0-20% en poids d'un ou de plusieurs composants de cire, de 2-45% en poids d'un ou de plusieurs pigments à lustre nacré et/ou de paillettes produites sous vide poussé ou de manière hydrothermale et/ou d'un ou de plusieurs pigments colorés, dans un procédé de préparation d'une impression à effet, l'encre d'imprimerie étant mise en oeuvre à partir de l'unité de laque d'une machine offset et/ou d'une machine de laquage ou à partir d'une unité d'impression flexographique.
